# EUROPEAN PATENT SPECIFICATION

(11) **EP 2 471 638 B1**
(45) Date of publication and mention of the grant of the patent: **06.12.2017**
(21) Application number: 09850214.9
(22) Date of filing: 09.10.2009
(51) Int. Cl.: B26F 3/00, B23K 26/00, B23Q 35/00

(54) **COPYING APPARATUSES**
KOPIERVORRICHTUNGEN
APPAREILS DE COPIE

(43) Date of publication of application: 04.07.2012
(73) Proprietor: Nihon Shoryoku Kikai Co., Ltd., Isesaki-shi, Gunma 372-0826 (JP)
(72) Inventor: TANAKA, Norio, Isesaki-shi Gunma 372-0826 (JP); NOGUCHI, Morio, Isesaki-shi Gunma 372-0826 (JP); WATANABE, Yoshiyuki, Isesaki-shi Gunma 372-0826 (JP)
(74) Representative: Glawe, Delfs, Moll
(86) International application number: PCT/JP2009/005275
(87) International publication number: WO 2011/042938

(56) References cited:
- JP-A- S6 281 286
- JP-A- 11 151 700
- JP-A- 2004 130 323
- JP-A- 2004 130 323
- JP-B1- S4 222 627
- JP-U- H0 512 100
- JP-U- H0 512 100
- JP-U- 55 103 077
- JP-U- 55 103 077
- JP-U- 58 047 376
- JP-U- 58 047 376
- JP-Y1- 42 022 627
- US-A1- 2002 038 792

## Description

### Field of Art

The present invention relates to a profiling apparatus based on water or a laser beam, according to the preamble of claims 1 and 4 (see, for example, US2002/038 792 A1).

### Background Art

There is known a profiling apparatus that removes edge material or burr appearing on the surface of a molded product of carbon fiber reinforced plastic (CFRP) or the like used as parts for an airplane or a vehicle, for example. Here, when a product is molded, a raw material sheet which is one size larger than the final product is used, and an extra portion is cut out after the molding. This cut-out extra portion means the edge material. The edge material is also called as an out-of-product or a scrap. CFRP has been recently used as an alternative to steel plate material, and automakers have particularly used CFRP as structuring material for a body, etc. to reduce the weight of the vehicle body. Therefore, sense of existence of CFRP has been strengthened.

It has been general in this type of processing apparatuses that a nozzle body for water, a laser beam or the like is secured to an arm of a robot, for example, a profiling member which is brought into contact with a profile target surface of a workpiece is secured to the nozzle body, and the nozzle body is operated in accordance with the motion of the arm, so that burr is cut out by water or a laser beam output from the nozzle tip of the nozzle body (for example, see Patent Document 1).

### Prior Art Document

### Patent Document

Patent Document 1: JP-UM-A-5-12100. US 2002/038 792 A1 discloses a similar structure as patent document 1.

### Summary of the Invention

### Problem to be solved by the Invention

However, in the conventional construction, the positional relationship between the nozzle tip of the nozzle body and the profiling member is fixed, and for example when a profile target surface of a workpiece is not uniform and the contour of the profile target surface greatly varies continuously or intermittently, the profiling member cannot accurately follow the profile target surface, so that it is impossible to perform cutting while the profile target surface is profiled.

Therefore, an object of the present invention is to provide a profiling apparatus that can make a profiling member accurately follow the profile target surface even when the profile target surface of a workpiece varies continuously or intermittently, and perform cutting while profiling the profile target surface.

### Means of solving the Problem

This object is achieved by a profiling apparatus according to claim 1 and claim 4, respectively; the dependent claims are related to further developments of the invention. According to the present invention, the displacement means changes the positional relationship between the profiling member and the nozzle body. Therefore, water (or a laser beam) can be output from the nozzle body to easily cut edge material or burr formed on the workpiece while the profiling member is made to follow the workpiece.

A plurality of profiling members may be provided and supported by a profiling head, and the profiling head may be formed to be freely swingable in association with the figure of the workpiece.

In this construction, when the positional relationship between the profiling member and the nozzle body is changed in association with the figure of the workpiece or the like, the profiling member can be easily made to follow the workpiece even when the workpiece is not designed to be uniform, but designed such that a linear portion, an uneven portion, etc. are repetitively changed continuously or intermittently, for example. Accordingly, water (or a laser beam) can be output from the nozzle tip of the nozzle body to easily cut edge material or burr formed on the workpiece while the profiling member is easily made to follow the workpiece.

Furthermore, in a profiling apparatus in which a profiling member for profiling a workpiece is secured to a nozzle body for outputting water or a laser beam and a workpiece is cut by water or a laser beam from the nozzle body while the workpiece is profiled by the profiling member, a plurality of profiling members may be arranged along an output direction of the water or the laser beam so as to guide the workpiece from both the sides thereof, and displacement means for changing the distance between the profiling members may be provided.

The profiling members may be profiling rollers rolling on the workpiece.

### Effect of the Invention

According to the present invention, the displacement means changes the positional relationship between the profiling member and the nozzle body, and thus the water (or laser beam) is output from the nozzle body to easily cut edge material or burr formed on the workpiece while the profiling member is made to follow the workpiece.

### Brief Description of the Drawings

[Fig. 1] A is a front view showing an embodiment, B is a bottom view and C is a side view.
[Fig. 2] A is a side view showing a profiling head, and B and C are plan views.
[Fig. 3] A and B are plan views of the profiling head.
[Fig. 4] is a diagram showing another embodiment, wherein A is a front view showing the other embodiment, B is a bottom view and C is a side view.
[Fig. 5] A is a side view of Fig. 4A, and B is a diagram showing separation of profiling members from each other.
[Fig. 6] is an enlarged view showing a main part of another embodiment.

### Embodiments for carrying out the Invention

Embodiments according to the present invention will be hereunder described with reference to the drawings.

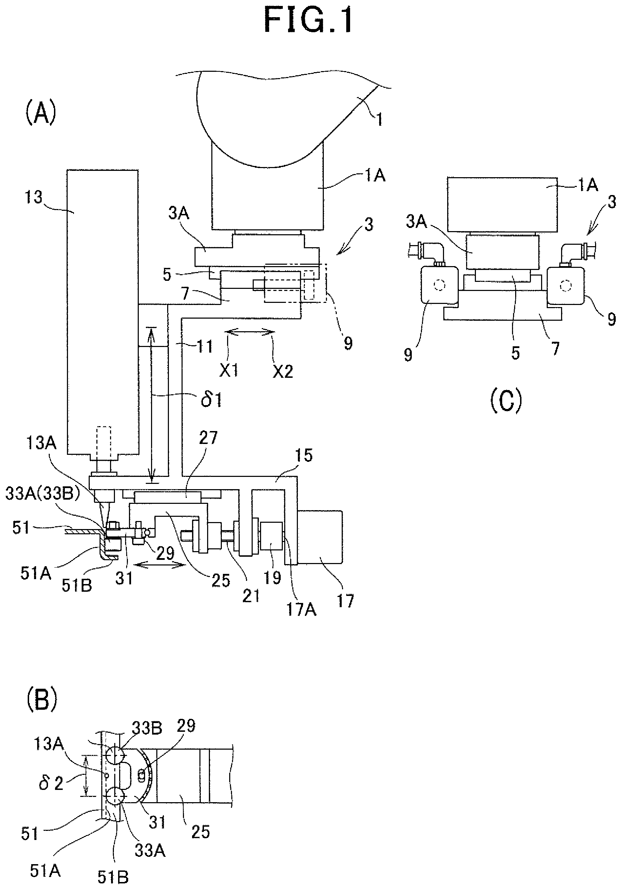

In Fig. 1A, 1 represents an arm of a multi-joint robot, and a floating mechanism 3 is disposed at the tip 1A of the arm 1. The floating mechanism 3 has a base portion 3A fixed to the tip 1A of the arm 1, and a slider 7 is supported through a linear bearing 5 by the base portion 3A so as to be slidable in both the directions of an arrow X1 and an arrow X2. As shown in Fig. 1C, a pair of right and left air cylinders 9, 9 are joined to the slider 7. Through the motion of the air cylinders 9, 9, the slider 7 is pressed in the direction of the arrow X1 at all times by air pressure, and the slider 7 is pushed back when pressure which is equal to or more than the air pressure is applied in the direction of the arrow x2, that is, the slider 7 is set to a floating state.

A stay 11 is fixed to the slider 7, and a nozzle body 13 for water cutting (or laser cutting) is supported at two points of the front edge of the stay 11 which are spaced from each other at an interval of δ1 in the vertical direction in Fig. 1A. Furthermore, a support plate 15 is fixed to the lower edge of the stay 11 in Fig. 1A, and a servo motor 17 is fixed to the support plate 15.

An output shaft 17A of the servo motor 17 is joined to a ball screw 21 through a coupling 19, and a slider 25 is joined to the ball screw 21 through a screw nut 23. These elements constitute displacement means.

The slider 25 is engaged with a linear bearing 27, and the linear bearing 27 is fixed to the support plate 15.

As shown in Fig. 1B, aU-shapedprofilinghead31 is supported through a pin 29 at the tip of the slider 25 so as to be freely swingable. A pair of profiling rollers (cam followers) 33A and 33B which come into contact with a surface 51A to be profiled of the workpiece 51 and rolling on the profile target surface 51A are pivotally mounted at both the end portions of the profiling head 31 so as to be spaced from each other at a predetermined interval δ2.

The nozzle tip 13A of the nozzle body 13 is located between the pair of profiling rollers 33A and 33B, and water (or laser beam) is output from the nozzle tip 13A while the profile target surface 51A of the workpiece 51 is profiled by the profiling rollers 33A and 33B, thereby cutting and removing burr (or edge material) 51B which is formed integrally with the workpiece 51.

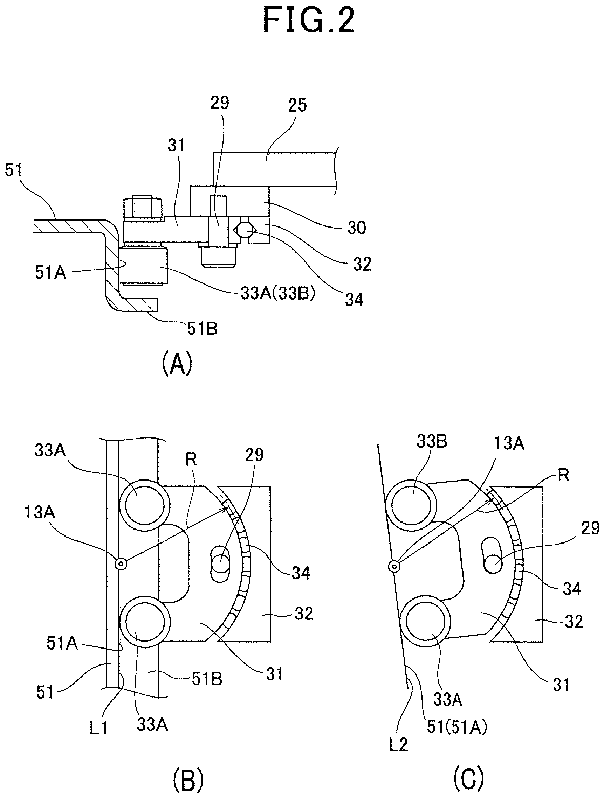

Fig. 2A is a side view of a profiling head, and Figs. 2B and 2C are plan views of the profiling head.

A reception table 32 is fixed to the tip of the slider 25 through a base table 30, a profiling head 31 is fitted to the reception table 32 through a bearing 34, and the profiling head 31 is freely swingably supported through a pin 29.

The bearing 34 is designed as a curved surface whose arc radius R is a radius extending from the nozzle tip 13A of the nozzle body 13 as the center.

In this embodiment, as shown in Figs. 2A and 2B, when the profile target surface 51A of the workpiece 51 is a straight line portion L1, the function of the servo motor 17 is stopped, and the positions (dimension W1) of the pair of profiling rollers 33A and 33B with respect to the position of the nozzle tip 13A are fixed. Furthermore, water (or laser beam) is output from the nozzle tip 13 while the profiling rollers 33A and 33B are pressed against the profile target surface 51A of the workpiece 51 to profile the profile target surface 51A by impelling force of the floating mechanism 3, thereby cutting burr (or edge material) 51B formed integrally with the workpiece 51.

On the other hand, when the profile target surface 51A of the workpiece 51 is an inclined straight line portion L2 as shown in Fig. 2C, the profiling head 31 swings around the pin 29 in accordance with this inclination, and the pair of profiling rollers 33A and 33B are inclined to profile the inclined straight line portion L2.

Water (or laser beam) is output from the nozzle tip 13A while the profile target surface 51A of the workpiece 51 is profiled by the profiling rollers 33A and 33B, thereby cutting the burr (or edge material) 51B formed integrally with the workpiece 51.

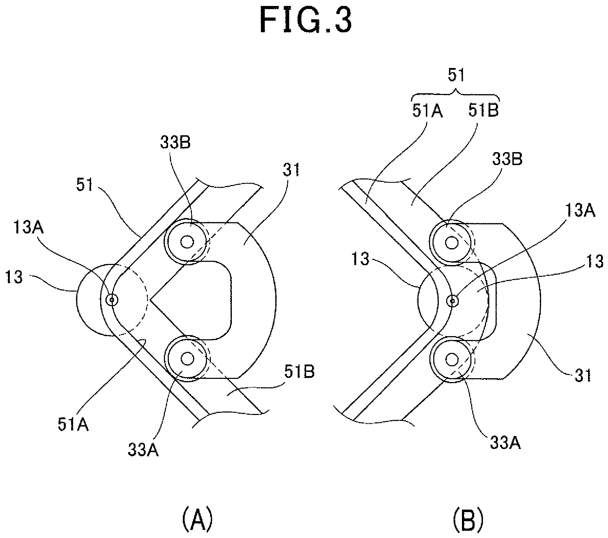

Furthermore, in this construction, as shown in Figs. 3A and 3B, the positional relationship (dimension W2 and dimension W0) between the pair of profiling rollers 33A and 33B and the nozzle tip 13A of the nozzle body 13 is relatively varied in accordance with the figure of the profile target surface 51A of the workpiece 51 by the function of the servo motor 17. In these cases, the cutting position with respect to the profile target surface 51A is fixed. For example, when the profile target surface 51A of the workpiece 51 is an inwardly curved surface (inward R) of substantially 90° as shown in Fig. 3A, the servo motor 17 is reversely rotated to make the slider 25 recede through the ball screw 21, whereby the pair of profiling rollers 33A and 33B recede.

Then, water (or laser beam) is output from the nozzle tip 13A of the nozzle body 13 while the inwardly rounded profile target surface 51A of the workpiece 51 is profiled by the profiling rollers 33A and 33B, thereby cutting burr 51B formed integrally with the workpiece 51.

Furthermore, when the profile target surface 51A of the workpiece 51 is an outwardly curved surface (outward R) of substantially 90° as shown in Fig. 3B, the servo motor 17 is forwardly rotated to make the slider 25 advance through the ball screw 21, whereby the pair of profiling rollers 33A and 33B advance.

Then, water (or laser beam) is output from the nozzle tip 13A of the nozzle body 13 while the outwardly rounded profile target surface 51A of the workpiece 51 is profiled by the profiling rollers 33A and 33B, thereby cutting burr 51B formed integrally with the workpiece 51.

The servo motor 17 is forwardly or reversely rotated according to control data (not shown) which has been stored through robot teaching and are associated with the figure of the profile target surface 51A of the workpiece 51.

According to this embodiment, the floating mechanism 3 which is actuated by proper air pressure is provided, and thus the profiling rollers 33A and 33B can be pressed against the profile target surface 51A of the workpiece 51 by proper air pressure, and thus the profile target surface 51A can be easily profiled.

Furthermore, according to this construction, even when the profile target surface 51A of the workpiece 51 is designed so that the figure thereof is varied as if the straight line portions of Fig. 2, the figures of Fig. 3 or the like are repetitively alternated continuously or intermittently, the pair of profiling rollers 33A and 33B are enabled to easily follow the profile target surface 51A by the function of the servo motor 17.

Accordingly, water (or laser beam) can be output from the nozzle tip 13A of the nozzle body 13 while the profiling rollers 33A and 33B are made to simply follow the profile target surface 51A, whereby the burr 51B formed integrally with the workpiece 51 can be easily cut.

In this embodiment, the profile target surface 51A of the workpiece 51 extends onto the extension line of the nozzle tip 13A, and the pair of profiling rollers 33A and 33B come into contact with the profile target surface 51A and roll on the profile target surface 51A. Accordingly, this embodiment is suitably used to cut the burr 51B or the like which exists so as to protrude from the lower side of the profile target surface 51A as shown in the figures.

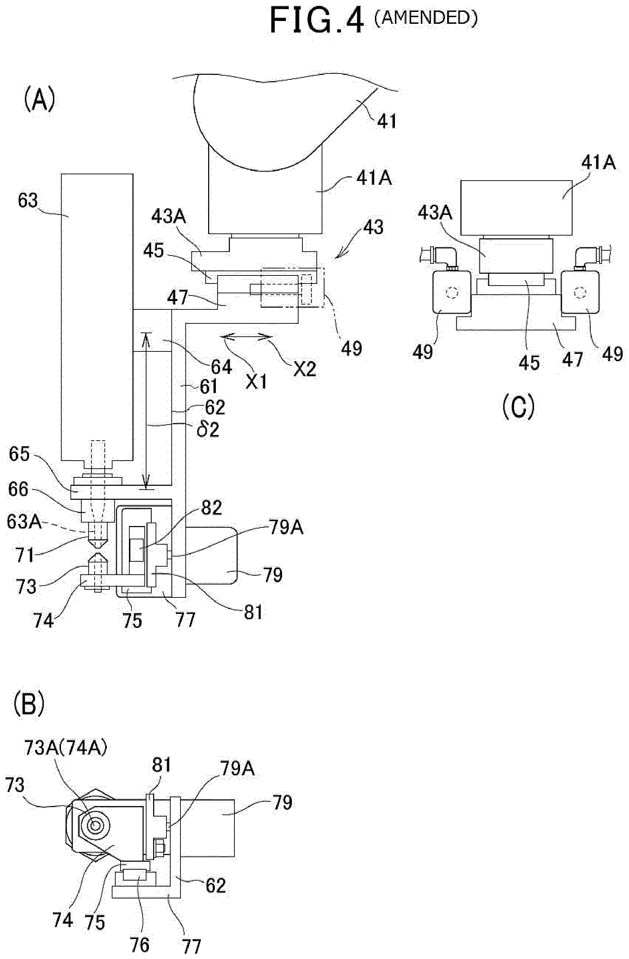

Fig. 4 shows another embodiment.

In Fig. 4A, 41 represents an arm of a multi-joint robot, and a floating mechanism 43 is fixed to the tip 41A of the arm 41.

The floating mechanism 43 has a base portion 43A fixed to the tip 41A of the arm 41, and a slider 47 is supported through a linear bearing 45 on the base portion 43A so as to be slidable in both the directions of an arrow x1 and an arrow x2. As shown in Fig. 4C, a pair of right and left air cylinders 49, 49 are joined to the slider 47. Through the motion of the air cylinders 49, 49, the slider 47 is pushed in the direction of the arrow x1 at all times by air pressure, and when pressure which is equal to or more than the air pressure is applied in the direction of the arrow x2, the slider 47 is pushed back, that is, the slider 47 is set to a floating state.

A stay 61 is fixed to the slider 47, a support plate 62 is fixed to the front edge of the stay 61 in the figures. A nozzle body 63 for water cutting (laser cutting) is supported at two points of a support member 64 and a support member 65 of the support plate 62 which are vertically spaced from each other at an interval of δ1 in Fig. 4A. As shown in Fig. 6, the nozzle tip 63A of the nozzle body 63 penetrates through the support member 65, extends through the inside of a cap 66 and terminates at the inside of a through hole 71A of a profiling roller (profiling member) 71.

The profiling roller 71 is secured to the cap 66 so as to be freely rotatable around the axial line of the nozzle tip 63A, and a profiling roller 73 which is paired with the above profiling roller is secured to the support member 74 so as to be freely rotatable around the axial line of the nozzle tip 63A. The profiling roller 73 has a through hole 73A in the axial direction, and water (or laser beam) output from the nozzle tip 63A of the nozzle body 63 passes through the through hole 71A of the profiling roller 71, cuts an edge 53E of a workpiece 53 described later, then passes through the through hole 73A of the profiling roller 73 and the through hole 74A of the support member 74, and is discharged.

In this construction, the axial line of each of the profiling rollers 71 and 73 is coincident with the output axis of the water (or the laser beam). However, the present embodiment is not limited to this style, the respective profiling rollers 71 and 73 may be arranged along the output direction of water (or laser beam) so as to guide the workpiece 53 from both the sides, and the respective axial lines may be displaced from each other.

As shown in Fig. 6, the support member 74 is fixed to the slider 75, the slider 75 is engaged with a linear bearing 76, and the linear bearing 76 is fixed to a plate 77 which is fixed to a support plate 62.

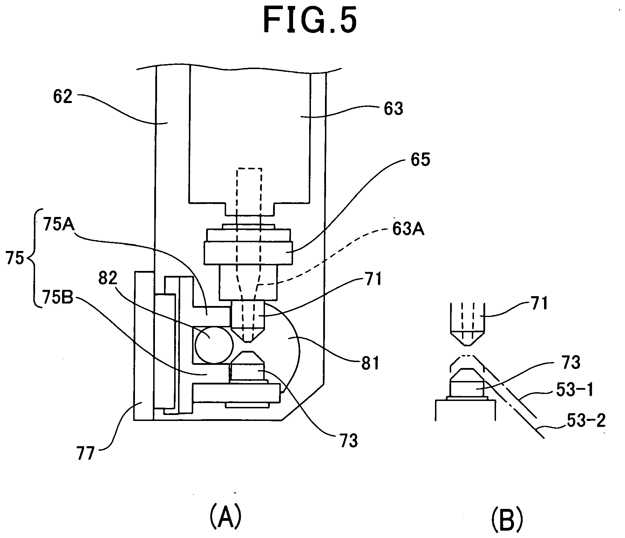

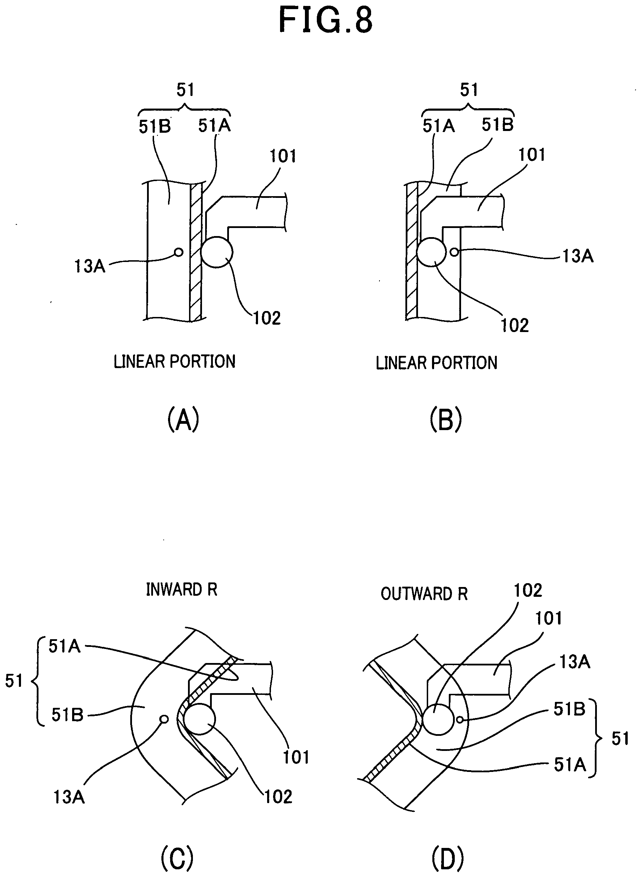

A servo motor (displacement means) 79 is fixed to the support plate 62, and the output shaft 79A of the servo motor 79 is fixed to a rotational plate 81. An eccentric cam follower 82 is mounted on the rotational plate 81, and the eccentric cam follower 82 is fitted between grip portions 75A, 75A of the slider 75 as shown in Fig. 5A.

The servo motor 79 is forwardly and reversely rotated according to control data which have been stored through robot teaching and are associated with the figure of the profile target surface 53A of the workpiece 53. When the servo motor 7 9 is rotated, the rotational plate 81 is rotated, the eccentric cam follower 82 is rotated, and the slider 75 is vertically moved through the grip portions 75A, 75A in the figure. For example, when the servo motor 79 is forwardly rotated as shown in Fig. 5B, the interval between the profiling rollers 71 and 73 increases, and when the servo motor 79 is reversely rotated, the interval decreases.

According to this construction, the profiling rollers 71 and 73 leave each other according to the information of the robot teaching, and the profile target surface 53A of the workpiece 53 can be profiled. Therefore, even when the profile target surface 53A is not uniform and the figure thereof varies, the profile rollers 71 and 73 can be made to follow the profile target surface 53A of the workpiece 53 simply.

In this embodiment, as shown in Fig. 6, the workpiece 53 is supported between the pair of profiling rollers 71 and 73, and the pair of profiling rollers 71 and 73 are rolled on the profile target surface 53A of the workpiece 53. Therefore, water (or laser beam) can be output from the nozzle tip 63A of the nozzle body 63 while the profiling rollers 71 and 73 are made to follow the profile target surface 53A, whereby the edge (or edge material) 53E of the workpiece 53 can be accurately cut.

Furthermore, the profiling rollers 71 and 73 are arranged in the axial direction of the nozzle body 63. One profiling roller 71 is provided with the through hole 71A facing the nozzle tip 63A of the nozzle body 63, and the other profiling roller 73 is allowed to freely leave the one profiling roller 71 by the function of the servo motor 79.

Accordingly, the profiling rollers can follow when a chamfering amount of the workpiece varies, and the profiling rollers 71 and 73 can be made to easily follow the profile target surface 53A of the workpiece 53 even when the profile target surface 53A is not uniform and the figure thereof varies or even when the chamfering amount varies every site. Accordingly, a laser beam can be output from the nozzle tip 63A while the profiling rollers 71 and 73 are made to follow the workpiece, whereby the edge 53E of the workpiece 53 can be accurately cut.

### Description of Reference Numerals

- 1, 41: multi-joint robot arm
- 3, 43: floating mechanism
- 9, 49: air cylinder
- 11, 61: stay
- 13, 63: nozzle body
- 13A, 63A: nozzle tip
- 17, 79: servo motor (displacement means)
- 25: slider
- 31: profiling head
- 33A, 33B, 71, 73: profiling roller
- 51: workpiece
- 51A: profile target surface
- 51B: burr

## Claims

1. A profiling apparatus comprising a profiling member (33A, 33B) for profiling a workpiece (51) and a nozzle body (13) for outputting water or a laser beam, and cutting the workpiece by water or a laser beam from the nozzle body while the workpiece is profiled by the profiling member, comprising:
a multi-joint robot that has an arm (1);
a floating mechanism (3) that has
a base portion (3A) fixed to a tip (1A) of the arm,
a slider (7) supported through a linear bearing (5) by the base portion so as to be slidable in predetermined first and second directions (X1, X2), a stay (11) fixed to the slider and supporting the nozzle body at two points of the front edge of the stay which are spaced from each other by an interval in vertical direction; and **characterised by** :
two air cylinders (9) jointed to the slider,
pressing the slider in the first direction (X1), and push back the slider so as to set the slider to a floating state when air pressure applied to the second direction (X2) is equal to or more than a predetermined pressure; and
displacement means that has
a servo motor (17) fixed to a support plate (15) fixed to the stay, and a slider (25) jointed to an output shaft (17A) of the servo motor by a ball screw (21), and
configured to make the profiling member (33A, 33B) to profile a profile target surface of a workpiece by the function of the servo motor to change positional relationship between the profiling member and the nozzle body.

2. The profiling apparatus according to claim 1, wherein the profiling member (33A, 33B) is a profiling roller rolling on the workpiece.

3. The profiling apparatus according to any one of claims 1 to 3, wherein a plurality of profiling members (33A, 33B) are provided and mounted on a profiling head (31), and the profiling head is formed to be freely swingable in association with the figure of the workpiece.

4. A profiling apparatus comprising a profiling member (71, 73) for profiling a workpiece (51) and a nozzle body (63) for outputting water or a laser beam, and cutting the workpiece by water or a laser beam from the nozzle body while the workpiece is profiled by the profiling member, comprising:
a multi-joint robot that has an arm (41);
a floating mechanism (43) that has
a base portion (43A) fixed to a tip (41A) of the arm,
a slider (47) supported through a linear bearing (45) by the base portion so as to be slidable in predetermined first and second directions (X1, X2), a stay fixed to the slider and a support plate (62) fixed to the front edge of the stay and having two support members (64, 65) which are vertically spaced from each other supporting the nozzle body at two points; and **characterised by** :
two air cylinders (49) jointed to the slider,
pressing the slider in the first direction (X1), and
push back the slider so as to set the slider to a floating state when air pressure applied to the second direction (X2) is equal to or more than a predetermined pressure; and
displacement means that has
a servo motor (79) fixed to the support plate (62), and a slider (75) jointed to an output shaft (79A) of the servo motor by an eccentric cam follower (82) and configured to make the profiling member (71, 73) to profile a profile target surface of a workpiece by the function of the servo motor to change positional relationship between the profiling member and the nozzle body.

5. A profiling apparatus according to claim 1, wherein the displacement means supports a plurality of profiling members (33A, 33B) profile a workpiece and that are arranged along an output direction of the water or the laser beam so as to guide the workpiece from both the sides thereof, and configured to change the distance between the profiling members.

6. The profiling apparatus according to claim 5, wherein the profiling members (33A, 33B) profiling rollers rolling on the workpiece.

## Patentansprüche

1. Nachformungsvorrichtung mit einem Nachformungselement (33A, 33B) zum Nachformen eines Werkstücks (51) und einem Düsenkörper (13) zur Abgabe von Wasser oder eines Laserstrahls und zum Schneiden des Werkstücks mit Wasser oder einem Laserstrahl aus dem Düsenkörper während das Werkstück durch das Nachformungselement nachgeformt wird, mit:
einem Gelenkroboter, der einen Arm (1) aufweist,
einem Schwebemechanismus (3),
der einen Basisteil (3A) aufweist, der an einem Oberteil (1A) des Arms befestigt ist,
einem Schlitten (7), der über ein lineares Lager (5) durch den Basisteil getragen wird, um in vorgegebenen ersten und zweiten Richtungen (X1, X2) verschiebbar zu sein,
einem Ständer (11), der an dem Schlitten befestigt ist und den Düsenkörper an zwei Punkten der Vorderkante des Ständers zu tragen, die voneinander um ein Intervall in vertikaler Richtung beabstandet sind,
und **gekennzeichnet durch**
zwei Luftzylinder (9), die mit dem Schlitten verbunden sind, den Schlitten in die erste Richtung (X1) drücken und den Schlitten zurückschieben, um so den Schlitten in einen Schwebezustand zu versetzen, wenn Luftdruck, der in der zweiten Richtung (X2) angelegt wird, gleich oder höher als ein vorgegebener Druck ist, und
eine Verlagerungseinrichtung mit einem Servomotor (17), der an einer Trägerplatte (15) befestigt ist, die an dem Ständer befestigt ist, und einem Schlitten (25), der mit einer Ausgangswelle (17A) des Servomotors über eine Kugelgewindespindel (21) verbunden ist,
und ausgebildet ist, um das Nachformungselement (33A, 33B) zum Nachformen eines Nachformungselement-Zielfläche eines Werkstücks durch die Funktion des Servomotors zu veranlassen, um die positionelle Beziehung zwischen dem Nachformungselement und dem Düsenkörper zu ändern.

2. Nachformungsvorrichtung nach Anspruch 1, wobei das Nachformungselement (33A, 33B) eine Nachformungswalze ist, die auf dem Werkstück rollt.

3. Nachformungsvorrichtung nach einem der Ansprüche 1 bis 2, wobei eine Anzahl von Nachformungselementen (33A, 33B) vorgesehen sind und auf einem Nachformungskopf (31) montiert sind und wobei der Nachformungskopf ausgebildet ist, um frei im Übereinstimmung mit der Form des Werkstücks zu schwingen.

4. Nachformungsvorrichtung mit einem Nachformungselement (71, 73) zum Nachformen eines Werkstücks (51) und einem Düsenkörper zur Abgabe von Wasser oder eines Laserstrahls und zum Schneiden des Werkstücks mit Wasser oder einem Laserstrahl aus dem Düsenkörper, während das Werkstück durch das Nachformungselement nachgeformt wird, mit:
einem Gelenkroboter mit einem Arm (41),
einem Schwebemechanismus (43), der einen Basisteil (43A) aufweist,
der an einem Oberteil (41A) des Arms befestigt ist,
einem Schlitten (47), der von einem linearen Lager (45) durch den Basisteil getragen wird, um so in vorgegebenen ersten und zweiten Richtungen (X1, X2) verschiebbar zu sein,
einem Ständer, der an dem Schlitten befestigt ist, und einer Trägerplatte (62), die an der Vorderkante des Ständers befestigt ist und zwei Trägerelemente (64, 65) aufweist, die voneinander vertikal beabstandet sind und den Düsenkörper an zwei Punkten stützen,
und **gekennzeichnet durch**
zwei Luftzylinder (49), die mit dem Schlitten verbunden sind, den Schlitten in die erste Richtung (X1) drücken und den Schlitten zurückschieben, um den Schlitten in einen Schwebezustand zu versetzen, wenn Luftdruck, der in der zweiten Richtung (X2) angelegt wird, gleich oder größer als ein vorgegebener Druck ist, und
eine Verlagerungseinrichtung, die einen Servomotor (79) aufweist, der an der Trägerplatte (62) befestigt ist, und einen Schlitten (75), der mit einer Ausgangswelle (79A) des Servomotors über einen exzentrischen Nockenfolger (82) verbunden ist und
ausgebildet ist, um das Nachformungselement (71, 73) zum Nachformen einer Nachformungs-Zielfläche eines Werkstücks durch die Funktion des Servomotors zu veranlassen, um die positionelle Beziehung zwischen dem Nachformungselement und dem Düsenkörper zu ändern.

5. Nachformungsvorrichtung nach Anspruch 1, wobei die Verlagerungseinrichtung eine Anzahl von Nachformungselementen (33A, 33B) trägt, die ein Werkstück nachformen und die entlang einer Abgaberichtung des Wassers oder des Laserstrahls angeordnet sind, um das Werkstück von seinen beiden Seiten zu führen und ausgebildet sind, um den Abstand zwischen den Nachformungselementen zu verändern.

6. Nachformungsvorrichtung nach Anspruch 5, wobei die Nachformungselemente (33A, 33B) Nachformungswalzen sind, die auf dem Werkstück rollen.

## Revendications

1. Appareil de profilage comprenant un élément de profilage (33A, 33B) pour profiler une pièce à oeuvrer (51) et un corps de buse (13) pour faire sortir un jet d'eau ou un faisceau laser, et couper la pièce à oeuvrer par un jet d'eau ou un faisceau laser provenant du corps de buse tandis que la pièce à oeuvrer est profilée par l'élément de profilage, comprenant :
un robot à articulation multiples qui possède un bras (1) ;
un mécanisme flottant (3) qui possède une portion de base (3A) fixée à une extrémité (A) du bras,
un coulisseau (7) supporté via un palier linéaire (5) par la portion de base de manière à être capable de coulisser dans une première et dans une seconde direction prédéterminée (X1, X2), une monture (11) fixée sur le coulisseau et supportant le corps de buse à deux points de la bordure antérieure de la monture qui sont espacés l'un de l'autre par un intervalle en direction verticale ;
et **caractérisé par** :
deux cylindres pneumatiques (9) réunis au coulisseau, qui pressent le coulisseau dans la première direction (X1) et qui poussent le coulisseau en retour de manière à placer le coulisseau dans un état flottant quand la pression de l'air appliquée dans la seconde direction (X2) est égale ou supérieure à une pression prédéterminée ; et
un moyen de déplacement qui possède un servomoteur (17) fixé à une plaque support (15) fixée sur la monture, et un coulisseau (25) réuni à un arbre de sortie (17A) du servomoteur par une vis à recirculation de billes (21), et configuré pour amener l'élément de profilage (33A, 33B) à profiler une surface cible profilée d'une pièce à oeuvrer par la fonction du servomoteur qui est de changer la relation de position entre l'élément de profilage et le corps de buse.

2. Appareil de profilage selon la revendication 1, dans lequel l'élément de profilage (33A, 33B) est un galet de profilage qui roule sur la pièce à oeuvrer.

3. Appareil de profilage selon l'une quelconque des revendications 1 et 2, dans lequel une pluralité d'éléments de profilage (33A, 33B) sont prévus et montés sur une tête de profilage (31), et la tête de profilage est formée de manière à être capable de pivoter librement en association avec le contour de la pièce à oeuvrer.

4. Appareil de profilage comprenant un élément de profilage (71, 73) pour profiler une pièce à oeuvrer (51) et un corps de buse (63) pour faire sortir un jet d'eau ou un faisceau laser, et pour découper la pièce à oeuvrer par un jet d'eau ou par un faisceau laser depuis le corps de buse alors que la pièce à oeuvrer est profilée par l'élément de profilage, comprenant :
un robot à articulation multiples qui possède un bras (41) ;
un mécanisme flottant (43) qui possède une portion de base (43A) fixée à une extrémité (41A) du bras,
un coulisseau (47) supporté via un palier linéaire (45) par la portion de base de manière à être capable de coulisser dans une première et dans une seconde direction prédéterminée (X1, X2),
une monture fixée sur le coulisseau et une plaque support (62) fixée sur la bordure avant de la monture et ayant deux éléments de support (64, 65) qui sont verticalement espacés l'un de l'autre et qui supportent le corps de buse en deux points ;
et **caractérisé par** :
deux cylindres pneumatiques (49) réunis au coulisseau, qui pressent le coulisseau dans la première direction (X1) et qui poussent le coulisseau en retour de manière à placer le coulisseau dans un état flottant quand la pression de l'air appliquée vers la seconde direction (X2) est égale ou
supérieure à une pression prédéterminée ; et
un moyen de déplacement qui possède un servomoteur (79) fixé sur la plaque support (62), et
un coulisseau (75) réuni à un arbre de sortie (79A) du servomoteur par un suiveur de came excentrique (82) et configuré pour amener l'élément de profilage (71, 73) à profiler une surface cible profilée d'une pièce à oeuvrer par la fonction du servomoteur qui est de changer la relation de position entre l'élément de profilage et le corps de buse.

5. Appareil de profilage selon la revendication 1, dans lequel le moyen de déplacement supporte une pluralité d'éléments de profilage (33A, 33B) qui profilent une pièce à oeuvrer et qui sont agencés le long d'une direction de sortie du jet d'eau ou du faisceau laser de manière à guider la pièce à oeuvrer depuis ses deux côtés, et configuré pour changer la distance entre les éléments de profilage.

6. Appareil de profilage selon la revendication 5, dans lequel les éléments de profilage (33A, 33B) sont des galets de profilage qui roulent sur la pièce à oeuvrer.
